# EUROPÄISCHE PATENTSCHRIFT

(11) **EP 3 454 084 B1**
(45) Veröffentlichungstag und Bekanntmachung des Hinweises auf die Patenterteilung: **04.09.2024**
(21) Anmeldenummer: 18189658.0
(22) Anmeldetag: 20.08.2018
(51) Int. Cl.: G01S 13/931, B62D 15/02, G05D 1/00, G08G 1/16, G06V 20/58, B60W 40/04

(54) **VERFAHREN ZUM BETREIBEN EINES FAHRERASSISTENZSYSTEMS FÜR EIN KRAFTFAHRZEUG UNTER VERWENDUNG EINER VEKTORBASIERTEN UND EINER GITTERBASIERTEN UMGEBUNGSKARTE SOWIE FAHRERASSISTENZSYSTEM**
METHOD FOR OPERATING A DRIVER ASSISTANCE SYSTEM FOR A MOTOR VEHICLE USING A VECTOR-BASED AND A GRID-BASED MAP OF THE ENVIRONMENT AND DRIVER ASSISTANCE SYSTEM
PROCÉDÉ DE FONCTIONNEMENT D'UN SYSTÈME D'AIDE À LA CONDUITE POUR UN VÉHICULE AUTOMOBILE À L'AIDE D'UNE CARTE D'ENVIRONNEMENT À BASE DE VECTEURS ET À BASE DE GRILLE AINSI QUE SYSTÈME D'AIDE À LA CONDUITE

(30) Priorität: 08.09.2017 DE 102017008569
(43) Veröffentlichungstag der Anmeldung: 13.03.2019
(73) Patentinhaber: Valeo Schalter und Sensoren GmbH, 74321 Bietigheim-Bissingen (DE)
(72) Erfinder: Heimberger, Markus, 74321 Bietigheim-Bissingen (DE); Thin, Charles, 74321 Bietigheim-Bissingen (DE); Lobo-Palacios, Llarina, 74321 Bietigheim-Bissingen (DE); Fuchs, Fabian, 74321 Bietigheim-Bissingen (DE)
(74) Vertreter: Pothmann, Karsten

(56) Entgegenhaltungen:
- DE-A1- 102010 006 828
- DE-A1- 102014 111 126
- DE-A1- 102015 115 012
- DE-A1- 102015 217 891
- MOHAMED ESSAYED BOUZOURAA ET AL: "Fusion of occupancy grid mapping and model based object tracking for driver assistance systems using laser and radar sensors", INTELLIGENT VEHICLES SYMPOSIUM (IV), 2010 IEEE, IEEE, PISCATAWAY, NJ, USA, 21 June 2010 (2010-06-21), pages 294 - 300, XP031732267, ISBN: 978-1-4244-7866-8

## Beschreibung

Die vorliegende Erfindung betrifft ein Verfahren zum Betreiben eines Fahrerassistenzsystems eines Kraftfahrzeugs, bei welchem von einer Sensoreinrichtung fortlaufend Sensordaten empfangen werden, wobei die Sensordaten zumindest ein Objekt in einer Umgebung des Kraftfahrzeugs beschreiben und anhand der Sensordaten eine relative Lage zwischen dem Kraftfahrzeug und dem zumindest einen Objekt bestimmt wird, eine vektorbasierte Umgebungskarte bereitgestellt wird, welche die Umgebung beschreibt, wobei in der vektorbasierten Umgebungskarte das zumindest eine Objekt durch ein Objektmerkmal repräsentiert wird und die relative Lage zwischen dem Kraftfahrzeug und dem zumindest einen Objekt durch einen Vektor beschrieben wird, wobei das Objektmerkmal und/oder der Vektor anhand der Sensordaten fortlaufend aktualisiert werden. Darüber hinaus betrifft die Erfindung ein Fahrerassistenzsystem für ein Kraftfahrzeug.

Das Interesse richtet sich vorliegend auf Fahrerassistenzsysteme, die den Fahrer beim Führen des Kraftfahrzeugs unterstützen oder vollautomatisch zum Navigieren des Kraftfahrzeugs genutzt werden. Ein solches Fahrerassistenzsystem kann den Fahrer beispielsweise beim Einparken und/oder beim Ausparken des Kraftfahrzeugs unterstützen. Ferner sind Fahrerassistenzsysteme bekannt, welche vollautomatisch eine für das Kraftfahrzeug geeignete Parklücke erkennen können und wenn dies von dem Fahrer gewünscht ist, in diese Parklücke einparken. Weiterhin kann das Fahrerassistenzsystem dazu dienen, das Kraftfahrzeug autonom entlang einer zuvor aufgezeichneten Trajektorie zu manövrieren. Derartige Fahrerassistenzsysteme nutzen Informationen über die Eigenschaften der Umgebung des Kraftfahrzeugs. Diese Informationen können beispielsweise in einer digitalen Umgebungskarte gespeichert sein, welche die Umgebung des Kraftfahrzeugs abbildet.

Hierzu sind aus dem Stand der Technik sogenannte gitterbasierte Umgebungskarten beziehungsweise Grid-basierte Umgebungskarten bekannt. Bei einer solchen gitterbasierten Umgebungskarte werden Zellen bereitgestellt, welche einzelne Bereiche der Umgebung des Kraftfahrzeugs repräsentieren. Wenn mit der Sensoreinrichtung des Fahrerassistenzsystems ein Objekt in der Umgebung erkannt wird, wird die Zelle, die diesem erkannten Objekt zugeordnet ist, als belegt markiert. Im Zusammenhang mit gitterbasierten Umgebungskarten ist es zudem aus dem Stand der Technik bekannt, dass die einzelnen Zellen in Abhängigkeit von den Sensordaten näher charakterisiert werden. Für die einzelnen Zellen kann bestimmt werden, mit welcher Wahrscheinlichkeit diese frei von Objekten sind. Der Nachteil einer solchen Umgebungskarte ist aber, dass diese einen hohen Speicherbedarf haben, vor allem wenn man für die Zellen eine hohe räumliche Auflösung wählt.

Darüber hinaus sind aus dem Stand der Technik sogenannte vektorbasierte Umgebungskarten bekannt, bei denen die relative Lage zwischen dem Kraftfahrzeug beziehungsweise einem Bezugspunkt des Kraftfahrzeugs und dem Objekt anhand eines Vektors repräsentiert wird. In diesem Zusammenhang beschreibt beispielsweise die WO 2016/020357 A1 ein Verfahren zum Erzeugen einer Umgebungskarte eines Umgebungsbereichs eines Kraftfahrzeugs, bei welchem ein Objekt in dem Umgebungsbereich anhand von Sensordaten einer Sensoreinrichtung erfasst wird und ein Positionswert bestimmt wird, welcher eine Position des Objekts beschreibt. Dabei ist es vorgesehen, dass ein Vektor zwischen dem Objekt und einem vorbestimmten Bezugspunkt des Kraftfahrzeugs ermittelt wird, der ermittelte Vektor von einem Fahrzeugkoordinatensystem ein globales Koordinatensystem der Umgebungskarte transformiert wird und der Positionswert in der Umgebungskarte anhand des transformierten Vektors bestimmt wird.

Mit einer solchen vektorbasierten Umgebungskarte kann zumindest ein Objekt in der Umgebung des Kraftfahrzeugs repräsentiert werden, welches ein mögliches Hindernis darstellen kann. In der vektorbasierten Umgebungskarte können einzelne Objekte durch entsprechende Objektmerkmale repräsentiert werden, denen zusätzliche Eigenschaften, wie beispielsweise eine Existenzwahrscheinlichkeit, eine räumliche Unsicherheit und/oder ein Detektionszeitpunkt zugeordnet werden kann. Dabei ist es üblicherweise vorgesehen, dass diese vektorbasierten Umgebungskarten mit einer hohen räumlichen Auflösung gespeichert werden. Auf diese Weise kann eine sehr gute räumliche Auflösung bei geringem Speicherbedarf realisiert werden. Nachteilig an derartigen vektorbasierten Umgebungskarten ist der Aspekt anzusehen, dass Freiraum nur bedingt abgespeichert beziehungsweise repräsentiert werden kann. Dabei ist unter Freiraum der Bereich der Umgebung zu verstehen, welcher frei von Objekten beziehungsweise Hindernissen ist. Um den Freiraum in einer vektorbasierten Umgebungskarte darstellen zu können, könnte dem Objektmerkmal beispielsweise eine Nicht-Existenzwahrscheinlichkeit zugeordnet werden. Insgesamt kann jedoch der Freiraum mit einer vektorbasierten Umgebungskarte nicht ausreichend repräsentiert werden.

Es ist Aufgabe der vorliegenden Erfindung, eine Lösung aufzuzeigen, wie eine Umgebung eines Kraftfahrzeugs in Form von Umgebungskarten mit einem geringeren Speicherbedarf abgebildet werden kann, sodass das Fahrerassistenzsystem auf Grundlage der Umgebungskarten zuverlässig manövriert werden kann.

Diese Aufgabe wird erfindungsgemäß durch ein Verfahren mit den Merkmalen gemäß den jeweiligen unabhängigen Ansprüchen gelöst. Vorteil auf der Weiterbildungen der vorliegenden Erfindung sind Gegenstand der abhängigen Ansprüche.

Gemäß einer Ausführungsform eines Verfahrens zum Betreiben eines Fahrerassistenzsystems eines Kraftfahrzeugs werden von einer Sensoreinrichtung insbesondere fortlaufend Sensordaten empfangen. Die Sensordaten beschreiben bevorzugt zumindest ein Objekt in einer Umgebung des Kraftfahrzeugs. Des Weiteren wird insbesondere anhand der Sensordaten eine relative Lage zwischen dem Kraftfahrzeug und dem zumindest einen Objekt bestimmt. Ferner wird eine vektorbasierte Umgebungskarte bereitgestellt, welche bevorzugt die Umgebung beschreibt. In der vektorbasierten Umgebungskarte wird das zumindest eine Objekt insbesondere durch ein Objektmerkmal repräsentiert und die relative Lage zwischen dem Kraftfahrzeug und dem zumindest einen Objekt wird bevorzugt durch einen Vektor beschrieben. Darüber hinaus ist es bevorzugt vorgesehen, dass das Objektmerkmal und/oder der Vektor anhand der Sensordaten fortlaufend aktualisiert werden. Zusätzlich wird anhand der Sensordaten ein Freiraum bestimmt, welcher insbesondere einen Bereich in der Umgebung beschreibt, welcher frei von dem zumindest einen Objekt ist. Außerdem wird bevorzugt eine gitterbasierte Umgebungskarte bereitgestellt, welche insbesondere die Umgebung beschreibt, wobei die gitterbasierte Umgebungskarte bevorzugt eine Mehrzahl von Zellen aufweist, welche korrespondierende Bereiche in der Umgebung abbilden. Dabei wird der Freiraum insbesondere in der gitterbasierten Umgebungskarte anhand der Sensordaten repräsentiert und fortlaufend aktualisiert.

Ein erfindungsgemäßes Verfahren dient zum Betreiben eines Fahrerassistenzsystems eines Kraftfahrzeugs. Hierbei werden von einer Sensoreinrichtung fortlaufend Sensordaten empfangen, wobei die Sensordaten zumindest ein Objekt in einer Umgebung des Kraftfahrzeugs beschreiben. Anhand der Sensordaten wird eine relative Lage zwischen dem Kraftfahrzeug und dem zumindest einen Objekt bestimmt. Ferner wird eine vektorbasierte Umgebungskarte bereitgestellt, welche die Umgebung beschreibt, wobei in der vektorbasierten Umgebungskarte das zumindest eine Objekt durch ein Objektmerkmal repräsentiert wird und die relative Lage zwischen dem Kraftfahrzeug und dem zumindest einen Objekt durch einen Vektor beschrieben wird, wobei das Objektmerkmal und/oder der Vektor anhand der Sensordaten fortlaufend aktualisiert werden. Darüber hinaus wird anhand der Sensordaten zusätzlich ein Freiraum bestimmt, welcher einen Bereich in der Umgebung beschreibt, welcher frei von dem zumindest einen Objekt ist. Außerdem wird eine gitterbasierte Umgebungskarte bereitgestellt, welche die Umgebung beschreibt, wobei die gitterbasierte Umgebungskarte eine Mehrzahl von Zellen aufweist, welche korrespondierende Bereiche in der Umgebung abbilden. Schließlich wird der Freiraum in der gitterbasierten Umgebungskarte anhand der Sensordaten repräsentiert und fortlaufend aktualisiert.

Mithilfe des Verfahrens soll ein Fahrerassistenzsystem für ein Kraftfahrzeug betrieben werden. Das Fahrerassistenzsystem umfasst die Sensoreinrichtung, mit welcher Objekte beziehungsweise Hindernisse in der Umgebung des Kraftfahrzeugs erfasst werden können. Hierzu können mit einem Steuergerät des Fahrerassistenzsystems Sensordaten empfangen werden, welche von der Sensoreinrichtung bereitgestellt werden und welche die Umgebung beziehungsweise einen Umgebungsbereich des Kraftfahrzeugs beschreiben. Die Sensoreinrichtung kann zumindest einen Umfeldsensor umfassen. Bevorzugt ist es vorgesehen, dass die Sensoreinrichtung mehrere Umfeldsensoren aufweist. Bei dem zumindest einen Umfeldsensor kann es sich beispielsweise um einen Ultraschallsensor, einen Radarsensor, einen Lidar-Sensor, einen Laserscanner und/oder eine Kamera handeln. Insbesondere ist es vorgesehen, dass von mehreren Umfeldsensoren jeweilige Sensordaten empfangen werden. Diese Sensordaten können dann fusioniert werden, um das zumindest eine Objekt zu erkennen beziehungsweise die relative Lage zu bestimmen. Insbesondere handelt es sich bei dem Umfeldsensor um einen Abstandssensor, mit dem der Abstand beziehungsweise die relative Lage zwischen Kraftfahrzeug und dem Objekt bestimmt werden kann. Der Abstand und/oder die relative Lage können beispielsweise anhand der Laufzeit des Sensorsignals, das mit dem Umfeldsensor ausgesendet und anschließend wieder empfangen wird, bestimmt werden. Die relative Lage kann auch mit mehreren Umfeldsensoren, beispielsweise anhand von Trilateration bestimmt werden. Wenn es sich bei dem Umfeldsensor um eine Kamera handelt, können mit dieser fortlaufend Bilder, welche die Umgebung oder einen Teil davon abbilden, aufgenommen werden. Mithilfe eines entsprechenden Objekterkennungsalgorithmus kann dann das zumindest eine Objekt in den Bildern erkannt werden.

Auf Grundlage der Sensordaten wird in die vektorbasierte Umgebungskarte bereitgestellt beziehungsweise erzeugt. Dabei kann das zumindest eine Objekt in der Umgebung des Kraftfahrzeugs, welches anhand der Sensordaten erkannt wurde, in der vektorbasierten Umgebungskarte anhand des Objektmerkmals repräsentiert werden. Es kann auch vorgesehen sein, dass von dem zumindest einen Objekt mehrere Objektpunkte beziehungsweise Stutzpunkte erfasst werden. Dabei kann jedem der Objektpunkte ein Objektmerkmal zugeordnet werden. Die relative Lage zwischen dem Kraftfahrzeug und dem zumindest einen Objekt wird anhand des Vektors beschrieben. Zu diesem Zweck kann ein Bezugspunkt des Kraftfahrzeugs, beispielsweise der Mittelpunkte der Achse des Kraftfahrzeugs, verwendet werden. Ausgehend von diesem Bezugspunkt kann dann der Vektor zu dem Objekt in einem Koordinatensystem des Kraftfahrzeugs bestimmt werden. Dieser Vektor umfasst eine Richtungsinformation und eine Entfernungsinformation, welche die relative Lage des Bezugspunkts zu dem Objekt beschreibt. Der Vektor wird ausgehend von einem Koordinatensystem des Kraftfahrzeugs, dessen Ursprung in den Bezugspunkt des Kraftfahrzeugs gelegt sein kann, in ein Koordinatensystem der vektorbasierten Umgebungskarte transformiert. Auf diese Weise kann die Position des Objekts beziehungsweise die relative Lage zwischen Kraftfahrzeug und dem Objekt präzise beschrieben werden. Ferner ist es möglich, die Position des Objekts mit einem geringen Speicherbedarf und mit einer hohen räumlichen Auflösung, welche beispielsweise im Zentimeter-Bereich oder im Millimeter-Bereich liegen kann, anzugeben.

Gemäß einem wesentlichen Aspekt der vorliegenden Erfindung ist es vorgesehen, dass zusätzlich zu der vektorbasierten Karte die gitterbasierte Umgebungskarte bereitgestellt wird, um die Umgebung des Kraftfahrzeugs zu beschreiben. Eine solche gitterbasierte Umgebungskarte kann auch als Grid-basierte Umgebungskarte bezeichnet werden. Diese gitterbasierte Umgebungskarte kann mehrere Zellen aufweisen, die durch das Gitter voneinander getrennt sind. Dabei beschreibt jede Zelle einen bestimmten Bereich in der Umgebung des Kraftfahrzeugs. Vorliegend ist es vorgesehen, dass sowohl die vektorbasierte Umgebungskarte als auch die gitterbasierte Umgebungskarte fortlaufend aktualisiert werden. Im Betrieb des Kraftfahrzeugs können mit der Sensoreinrichtung fortlaufend Sensordaten bereitgestellt werden, welche die Umgebung beschreiben. In der vektorbasierten Umgebungskarte kann dann das Objektmerkmal, welches das zumindest eine Objekt repräsentiert, und/oder der Vektor bestimmt werden und fortlaufend anhand der Sensordaten akkumuliert werden. Dabei können aufeinanderfolgende Messzyklen durchgeführt werden, wobei in jedem Messzyklus die Sensordaten empfangen werden und gegebenenfalls fusioniert werden. Der Vektor und/oder das Objektmerkmal werden in den jeweiligen Messzyklen aktualisiert, wobei insbesondere die Ergebnisse aus den vorhergehenden Messzyklen berücksichtigt werden. Gleiches gilt für die gitterbasierte Umgebungskarte, bei welcher die einzelnen Zellen fortlaufend auf Grundlage der Sensordaten aktualisiert werden.

Der vorliegenden Erfindung liegt die Erkenntnis zugrunde, dass die gitterbasierte Umgebungskarte dazu verwendet wird, Freiraum zu beschreiben. Insbesondere wird die gitterbasierte Umgebungskarte ausschließlich dazu verwendet, den Freiraum zu beschreiben und nicht dazu verwendet, das zumindest eine Objekt zu beschreiben. Der Freiraum beschreibt den Bereich der Umgebung des Kraftfahrzeugs, welcher frei von dem zumindest einen Objekt ist. Der Freiraum ist also frei von Objekten oder Hindernissen. In diesem Freiraum kann das Kraftfahrzeug manövriert werden, ohne dass eine Kollision mit dem zumindest einen Objekt droht. Vorliegend wird berücksichtigt, dass die Repräsentation von Objekten mittels einer gitterbasierte Umgebungskarte bei der verhältnismäßig hohen räumlichen Auflösung mit einem hohen Speicherbedarf realisierbar ist. Des Weiteren wird berücksichtigt, dass Freiraum mithilfe von vektorbasierten Umgebungskarten nicht zufriedenstellend repräsentiert werden kann. Daher ist es gemäß der Erfindung vorgesehen, dass Objekte der Umgebung des Kraftfahrzeugs durch die vektorbasierte Karte repräsentiert werden und dass Freiraum mittels der gitterbasierte in Umgebungskarte repräsentiert wird. Somit kann insgesamt eine sogenannte hybride Umgebungskarte der Umgebung des Kraftfahrzeugs bereitgestellt werden.

Erfindungsgemäß ist vorgesehen, dass das Objektmerkmal in der vektorbasierten Umgebungskarte eine Existenzwahrscheinlichkeit, und optional eine räumliche Unsicherheit und/oder einen Erfassungszeitpunkt des zumindest einen Objekts beschreibt. Dem Objektmerkmal kann also eine Eigenschaft zugeordnet werden, welche das zumindest eine Objekt näher beschreibt. Diese Eigenschaft kann die Existenzwahrscheinlichkeit sein, welche angibt, mit welcher Wahrscheinlichkeit das Objekt in der Umgebung vorhanden ist. Dem Objektmerkmal kann auch eine sogenannte Existenzmasse zugeordnet werden. Des Weiteren kann dem Objektmerkmal die räumliche Unsicherheit zugeordnet werden, welche beschreibt, mit welcher Genauigkeit die Position des Objekts bestimmt wurde. Die räumliche Unsicherheit kann beispielsweise auf Grundlage der Sensordaten und/oder des Sensorprinzips des Umfeldsensors bestimmt werden. Bei der Bestimmung der Existenzwahrscheinlichkeit und/oder der räumlichen Unsicherheit kann ferner berücksichtigt werden, ob das Objekt in mehreren zeitlich aufeinanderfolgenden Messzyklen und/oder mit mehreren Umfeldsensoren gleichzeitig erkannt wird. Darüber hinaus kann dem Objektmerkmal der Erfassungszeitpunkt zugeordnet werden. Dieser beschreibt beispielsweise zu welchem Zeitpunkt das Objekt erstmals anhand der Sensordaten erkannt wurde. Der Erfassungszeitpunkt kann auch als "Alter" des Objekts bezeichnet werden. Diese Eigenschaften können als Attribute des Objektmerkmals in der vektorbasierten Umgebungskarte gespeichert werden. Auf diese Weise kann das zumindest eine Objekt in der Umgebung näher charakterisiert werden.

In einer weiteren Ausführungsform wird jeder Zelle der gitterbasierten Umgebungskarte ein Wert zugeordnet, welcher angibt, ob die Zelle den Freiraum beschreibt, ob der Zustand der Zelle unbekannt ist und/oder ob die Zelle durch das zumindest eine Objekt belegt ist. Jeder Zelle der gitterbasierte Umgebungskarte kann ein Wert zugeordnet werden. Dieser Wert kann beispielsweise angeben, ob die Zelle den Freiraum oder einen Teil davon beschreibt. Mit anderen Worten kann der Wert angeben, ob die Zelle frei von Objekten ist. Der Wert kann auch angeben, ob der Bereich der Umgebung, der durch die Zelle repräsentiert wird, keinen Freiraum beschreibt. Der Wert kann auch angeben, dass die Belegung der Zelle durch das zumindest ein Objekt unbekannt ist. Im einfachsten Fall kann jeder Zelle ein erster Wert, der beschreibt dass die Zelle frei ist beziehungsweise den Freiraum beschreibt, oder ein zweiter Wert, der beschreibt, dass der Zustand der Zelle unbekannt ist, zugeordnet werden. Dies ermöglicht es, den Zustand der Zelle mithilfe eines Bits zu beschreiben. Der Wert kann auch angeben, ob der Bereich der Umgebung, der durch die Zelle repräsentiert ist, durch das zumindest eine Objekt belegt ist. Dies bedeutet, dass das zumindest eine Objekt oder ein Teil davon innerhalb des Umgebungsbereichs, der mit der Zelle korrespondiert, angeordnet ist. Auf diese Weise kann die gitterbasierte Umgebungskarte mit einem geringen Speicherbedarf bereitgestellt werden. Zugleich kann der Freiraum auf einfache und zuverlässige Weise repräsentiert werden.

Erfindungsgemäß wird jeder Zelle der gitterbasierten Umgebungskarte anhand der Sensordaten eine Freirauwahrscheinlichkeit zugeordnet, welche beschreibt, mit welcher Wahrscheinlichkeit die Zelle den Freiraum beschreibt. Die Freiraumwahrscheinlichkeit kann auch als "Nicht-Existenzwahrscheinlichkeit" angesehen werden. Wie bereits erläutert, werden fortlaufend beziehungsweise über mehrere Messzyklen die Sensordaten von der Sensoreinrichtung empfangen. Wenn nun anhand der Sensordaten erkannt wird, dass auch bei mehreren aufeinanderfolgenden Messzyklen kein Objekt in dem Bereich der Umgebung erfasst wird, der der Zelle zugeordnet ist, kann dieser Zelle eine verhältnismäßig hohe Freiraumwahrscheinlichkeit zugeordnet werden. In diesem Fall kann davon ausgegangen werden, dass sich in dem Bereich der Umgebung, welcher der Zelle zugeordnet ist, mit einer hohen Wahrscheinlichkeit kein Objekt befindet.

Wenn aber in dem Bereich der Umgebung in einzelnen Messzyklen das zumindest eine Objekt erkannt wird, kann der dazugehörigen Zelle eine verhältnismäßige geringe Freirauwahrscheinlichkeit zugeordnet werden. Dies ermöglicht es, den Freiraum, der durch die gitterbasierte Umgebungskarte beschrieben wird, näher zu charakterisieren.

Erfindungsgemäß werden die vektorbasierte Umgebungskarte und die gitterbasierte Umgebungskarte fortlaufend synchronisiert. Durch die vektorbasierte Umgebungskarte und die gitterbasierte Umgebungskarte werden unterschiedliche Varianten bereitgestellt, mit denen die Umgebung des Kraftfahrzeugs repräsentiert werden kann. Mit der vektorbasierten Umgebungskarte wird das zumindest eine Objekt und dessen Position genau angegeben. Mit der gitterbasierten Umgebungskarte wird der Freiraum beschrieben. Wenn nun diese beiden Umgebungskarten fortlaufend mit einander synchronisiert werden, kann eine zuverlässigere Repräsentation der Umgebung ermöglicht werden. Bei der Synchronisation der vektorbasierten Umgebungskarte mit der gitterbasierte Umgebungskarte kann beispielsweise das Objektmerkmal, dass das zumindest eine Objekt beschreibt, mit der korrespondierenden Zelle der gitterbasierte Umgebungskarte abgeglichen werden.

Dabei ist es insbesondere vorgesehen, dass falls anhand der Sensordaten ein weiteres Objekt in der Umgebung erkannt wird und bei dem Synchronisieren ein diesem Objekt zugeordnetes Objektmerkmal in der vektorbasierten Umgebungskarte in der gitterbasierten Umgebungskarte mit einer Zelle korrespondiert, welche den Freiraum beschreibt, das weitere Objekt als von einer potenziellen Fehlmessung stammend eingestuft wird und/oder das weitere Objekt als dynamisches Objekt klassifiziert wird. Hier wird also insbesondere der Fall betrachtet, dass zusätzlich zu dem zumindest einen Objekt ein weiteres Objekt anhand der Sensordaten erfasst wird. Das weitere Objekt kann also neu oder erstmals detektiert werden. Dies ist beispielsweise der Fall, wenn ein Objektmerkmal in der vektorbasierten Umgebungskarte in einem Bereich der Umgebung erkannt wird, der aber in der gitterbasierte Karte dem Freiraum zugeordnet ist. Dies kann beispielsweise der Fall sein, wenn mehrere Umfeldsensoren verwendet werden und mit einem der Umfeldsensoren in diesen Bereich der Umgebung über eine vorbestimmte Anzahl von Messzyklen kein Objekt erkannt wurde. Dieser Fall kann auch vorliegen, wenn bei einem Umfeldsensor dieser Bereich der Umgebung beziehungsweise diese Zelle der gitterbasierte Umgebungskarte als frei erkannt wurde. In diesem Fall kann ein in einem solchen Bereich detektiertes Objekt beispielsweise als Fehlmessung interpretiert werden. Es kann auch vorgesehen sein, dass das weitere Objekt als dynamisches Objekt, also als sich bewegendes Objekt betrachtet wird, da dieser Umgebungsbereich, der der Zelle in der gitterbasierte Umgebungskarte zugeordnet ist, zuvor als frei gemeldet wurde.

Bei dem Synchronisieren der gitterbasierten Umgebungskarte und der vektorbasierten Umgebungskarte kann ferner der Erfassungszeitpunkt berücksichtigt werden. So können beispielswiese bei der Bestimmung der Objektmerkmale in der vektorbasierten Umgebungskarte die aktuelle empfangenen Sensordaten höher gewichtet werden. Auch bei der Bestimmung der Zellen der gitterbasierten Umgebungskarte können die aktuelleren Sensordaten höher gewichtet werden. Beim Synchronisieren der beiden Umgebungskarten kann dann berücksichtigt werden, ob beispielsweise das Objektmerkmal oder die korrespondierende Zelle die aktuelleren Informationen beschreibt.

Bei dem Synchronisieren der gitterbasierten Umgebungskarte und der vektorbasierten Umgebungskarte kann ferner der Erfassungszeitpunkt berücksichtigt werden. So können beispielswiese bei der Bestimmung der Objektmerkmale in der vektorbasierten Umgebungskarte die aktuelle empfangenen Sensordaten höher gewichtet werden. Auch bei der Bestimmung der Zellen der gitterbasierten Umgebungskarte können die aktuelleren Sensordaten höher gewichtet werden. Beim Synchronisieren der beiden Umgebungskarten kann dann berücksichtigt werden, ob beispielsweise das Objektmerkmal oder die korrespondierende Zelle die aktuelleren Informationen beschreibt.

In einer weiteren Ausgestaltung wird die Existenzwahrscheinlichkeit des dem weiteren Objekt zugeordneten Objektmerkmals in Abhängigkeit von der Freirauwahrscheinlichkeit der zu dem Objektmerkmal korrespondierenden Zelle in der gitterbasierten Umgebungskarte reduziert. Auch für dieses weitere Objekt beziehungsweise das neue detektierte Objekt kann in der vektorbasierten Umgebungskarte ein Objektmerkmal bestimmt werden. Auch diesem weiteren Objekt kann als Eigenschaft die Existenzwahrscheinlichkeit zugeordnet werden. Wenn dieses weitere Objekt in vorhergehenden Messzyklen nicht erkannt wurde beziehungsweise wenn das weitere Objekt erstmals erkannt wurde, kann dem dazugehörigen Objektmerkmal eine verhältnismäßig geringe Existenzwahrscheinlichkeit zugeordnet werden.

Erfindungsgemäß ist vorgesehen, dass falls bei dem Synchronisieren die Existenzwahrscheinlichkeit des Objektmerkmals größer ist als die Freiraumwahrscheinlichkeit der zu dem Objektmerkmal korrespondierenden Zelle, die Zelle als belegt oder als unbekannt klassifiziert wird. Wie bereits erläutert, kann jeder Zelle in der gitterbasierten Umgebungskarte eine Freiraumwahrscheinlichkeit zugeordnet werden. Wenn nun beim Synchronisieren erkannt wird, dass sich zwischen der Existenzwahrscheinlichkeit in der vektorbasieren Umgebungskarten und der Freiraumwahrscheinlichkeit der zu dem Objektmerkmal korrespondierenden Zelle in der gitterbasierten Umgebungskarte Abweichungen ergeben, kann die Freiraumwahrscheinlichkeit anhand der Existenzwahrscheinlichkeit angepasst werden. Auf diese Weise kann der Freiraum zuverlässig beschrieben werden.

In einer weiteren Ausführungsform wird das Kraftfahrzeug mittels des Fahrerassistenzsystems zumindest semi-autonom manövriert, wobei das Manövrieren in Abhängigkeit von einem durchgeführten Fahrmanöver und/oder dem zumindest einen Objekt auf Grundlage der gitterbasierten Umgebungskarte und/oder der vektorbasierten Umgebungskarte durchgeführt wird. Mithilfe des Fahrerassistenzsystems kann das Kraftfahrzeug zumindest semi-manövriert werden. Dies bedeutet, dass das Fahrerassistenzsystem zumindest in die Lenkung beziehungsweise die Querführung des Kraftfahrzeugs eingreift. Bevorzugt ist es vorgesehen, dass das Kraftfahrzeug mittels des Fahrerassistenzsystems vollautonom manövriert wird. In diesem Fall übernimmt das Fahrerassistenzsystem auch einen Eingriff in einen Antriebsmotor und/oder ein Bremssystem des Kraftfahrzeugs. Dabei wird das Kraftfahrzeug auf Grundlage der vektorbasierten Umgebungsdaten/oder der gitterbasierte Umgebungskarte mittels des Fahrerassistenzsystems manövriert. Dabei wird anhand der vektorbasierten Umgebungskarte angegeben, wo sich das zumindest ein Objekt in der Umgebung des Kraftfahrzeugs befindet. In der vektorbasierten Umgebungskarte ist auch die Position des Objekts beziehungsweise der Objektpunkte des Objekts genau angegeben. In der gitterbasierte Umgebungskarte wird der Freiraum repräsentiert, in welchem das Kraftfahrzeug kollisionsfrei manövriert werden kann. Je nach Fahrmanöver oder Umgebungssituation kann entweder die vektorbasierte und/oder die gitterbasierte Umgebungskarte ausgewählt werden. Es kann vorgesehen sein, dass während des Manövrierens zwischen den Umgebungskarten quasi umgeschaltet wird.

Dabei ist es insbesondere vorgesehen, dass vor dem zumindest semi-autonomen Manövrieren des Kraftfahrzeugs eine Trajektorie geplant wird, wobei die Trajektorie zunächst anhand des in der gitterbasierten Umgebungskarte beschriebenen Freiraums geplant wird. Mithilfe des Fahrerassistenzsystems beziehungsweise kann eine Trajektorie bestimmt werden, entlang welcher das Kraftfahrzeug manövriert werden soll. Diese Trajektorie wird insbesondere vor dem zumindest semi-des Kraftfahrzeugs bestimmt. Zur Planung der Trajektorie kann zunächst die gitterbasierte Umgebungskarte herangezogen werden, welche den Freiraum beschreibt. Innerhalb des Freiraums kann dann die Trajektorie geplant werden. Dies eignet sich insbesondere wenn die Trajektorie in einem Bereich geplant werden soll, welcher sich über mehrere Meter erstreckt. Mithilfe der Umgebungskarte kann ein verhältnismäßig großer Bereich der Umgebung mit einer verhältnismäßig geringen räumlichen Auflösung abgedeckt werden. Somit kann die Trajektorie entlang eines Grundstücks zu einer Garage geplant werden.

In einer weiteren Ausführungsform wird das Kraftfahrzeug auf Grundlage der vektorbasierten Umgebungskarte manövriert, falls ein Abstand zwischen dem Kraftfahrzeug und dem zumindest einen Objekt einen vorbestimmten Mindestabstand unterschreitet und/oder falls das zumindest einen Objekt eine Parklücke begrenzt, in welche das Kraftfahrzeug manövriert wird und/oder falls während des Manövrierens anhand der Sensordaten ein weiteres Objekt erkannt wird. Wenn beispielsweise erkannt wird, dass sich das Kraftfahrzeug während des Manövrierens dem zumindest einen Objekt nähert, kann von der gitterbasierten Umgebungskarte auf die vektorbasierte Umgebungskarte umgeschaltet werden. Dies kann auch bei der Planung der Trajektorie der Fall sein, wenn beispielsweise erkannt wird, dass die Trajektorie verhältnismäßig nahe an dem zumindest einen Objekt vorbei führt. Hier kann bei der Planung der Trajektorie auf die vektorbasierte Umgebungskarte zurückgegriffen werden. Die vektorbasierte Umgebungskarte kann auch dann genutzt werden, wenn das Kraftfahrzeug zumindest semi-autonom in eine Parklücke eingeparkt werden soll. Da Parklücken üblicherweise eng sind beziehungsweise das Kraftfahrzeug beim Einparkten nahe an das zumindest eine Objekt, welche die Parklücke begrenzt, herangefahren wird, kann hier die vektorbasierte Umgebungskarte genutzt werden, welche die Position und/oder die räumlichen Abmessungen des zumindest einen Objekts genau beschreibt. Auch wenn während des Manövrierens und/oder während der Planung der Trajektorie anhand der Sensordaten ein weiteres Objekt erkannt wird, kann die vektorbasierte Umgebungskarte herangezogen werden. Dies gilt insbesondere für den Fall, dass es sich bei dem weitern Objekt um ein dynamisches Objekt handelt. Auf diese Weise kann das Kraftfahrzeug sicher und zuverlässig manövriert werden.

Weiterhin ist es vorteilhaft, wenn überprüft wird, ob das Objektmerkmal in der vektorbasierten Umgebungskarte oder zumindest einen Zelle der gitterbasierten Umgebungskarte eine aktuellere Information beschreiben und das Kraftfahrzeug auf Grundlage derjenigen Umgebungskarte manövriert wird, welche die aktuellere Information beschreibt. Mit anderen Worten sollen also immer die aktuellsten Informationen genutzt werden, um das Kraftfahrzeug zu Manövrieren und/oder um die Trajektorie zu planen.

In einer weiteren Ausführungsform ist es vorgesehen, dass die gitterbasierte Umgebungskarte im Vergleich zu der vektorbasierten Umgebungskarte mit einer geringeren räumlichen Auflösung bereitgestellt wird. Grundsätzlich kann also die vektorbasierte Umgebungskarte eine höhere räumliche Auflösung aufweisen als die gitterbasierte Umgebungskarte. Unter dem Begriff räumliche Auflösung ist vorliegend zu verstehen, wie genau die Umgebung in der jeweiligen Umgebungskarte abgebildet wird. Bei der gitterbasieren Umgebungskarte können die jeweiligen Zellen einen im Wesentlichen quadratischen Bereich in der Umgebung abbilden. Dabei kann eine Zelle einen Bereich in der Umgebung mit einer Seitenlänge von mehreren Zentimetern beschreiben. Die Seitenlänge kann zwischen 10 Zentimeter und 100 cm, beispielsweise 50 Zentimeter betragen. Mit der vektorbasierten Umgebungskarte kann eine Auflösung im Zentimeterbereich oder im Millimeterbereich ermöglicht werden.

Die jeweilige räumliche Auflösung der gitterbasieren Umgebungskarte und der vektorbasieren Umgebungskarte kann auch in Abhängigkeit von dem Typ des Umfeldsensors beziehungsweise der Sensoreinrichtung bestimmt werden. Des Weiteren kann auch Reichweite und/oder die Messgenauigkeit des Umfeldsensors berücksichtigt werden. Wenn beispielsweise ein Lidar-Sensor mit einem verhältnismäßig großen Erfassungsbereich verwendet wird, kann grundsätzlich die gitterbasierte Umgebungskarte verwendet werden, um den Freiraum zu beschreiben. Bei Bedarf kann dann die vektorbasierte Umgebungskarte herangezogen werden.

Weiterhin ist es vorteilhaft, wenn die gitterbasierte Umgebungskarte derart bestimmt wird, dass die Zellen, welche einen sich an eine Außenfläche des Kraftfahrzeugs anschließenden Nahbereich beschreiben, eine höhere räumliche Auflösung aufweisen als die Zellen, welche einen von dem Nahbereich verschiedenen Fernbereich beschreiben. Der Nahbereich ist der Bereich der Umgebung, welche sich direkt an die Außenseite des Kraftfahrzeugs anschließt. Dieser Nahbereich kann beispielsweise den Bereich innerhalb eines Abstands von 20 cm zu dem Kraftfahrzeug beschreiben. Während des Manövrierens des Kraftfahrzeugs kann insbesondere in diesem Nahbereich eine Kollision mit dem zumindest einen Objekt drohen. Beim Manövrieren im Nahbereich ist es erforderlich, dass schnelle und präzise Entscheidungen getroffen werden. Daher kann die räumliche Auflösung der Zellen in dem Nahbereich höher sein als in dem weiter entfernten Fernbereich. Es kann auch vorgesehen sein, dass die räumliche Auflösung der Zellen im Fernbereich vergrößert wird, um den Speicherbedarf zu verringern. Die räumliche Auflösung der Zellen kann auch in Anhängigkeit von der aktuellen Fahrsituation und/oder Umgebungssituation angepasst werden.

Ein erfindungsgemäßes Fahrerassistenzsystem für ein Kraftfahrzeug ist zum Durchführen eines erfindungsgemäßen Verfahrens und der vorteilhaften Ausgestaltungen davon ausgelegt. Das Fahrerassistenzsystem kann die Sensoreinrichtung zum Bereitstellen der Sensordaten aufweisen. Des Weiteren kann das Fahrerassistenzsystem ein elektronisches Steuergerät aufweisen, welches mit der Sensoreinrichtung zur Datenübertragung verbunden ist. Mittels des Steuergeräts können die Sensordaten der Sensoreinrichtung empfangen und ausgewertet werden. Insbesondere ist es vorgesehen, dass von unterschiedlichen Umfeldsensoren jeweils Sensordaten empfangen werden und fusioniert werden. Ferner können mit dem Steuergerät die vektorbasierte Umgebungskarte und die gitterbasierte Umgebungskarte bestimmt werden. Zudem kann das Fahrerassistenzsystem einen Speicher aufweisen, in welchem die vektorbasierte Umgebungskarte und die gitterbasierte Umgebungskarte gespeichert werden können.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Es kann auch vorgesehen sein, dass das Kraftfahrzeug als Nutzfahrzeug ausgebildet ist.

Zur Erfindung gehört auch ein Computerprogrammprodukt mit Programmcodemitteln, welche in einem computerlesbaren Medium gespeichert sind, um das erfindungsgemäße Verfahren und die vorteilhaften Ausgestaltungen davon durchzuführen, wenn das Computerprogrammprodukt auf einem Prozessor eines elektronischen Steuergeräts abgearbeitet wird.

Ein weiterer Aspekt der Erfindung betrifft ein computerlesbares Medium, insbesondere in Form einer computerlesbaren Diskette, CD, DVD, Speicherkarte, USB-Speichereinheit, oder ähnlichen, in dem Programmcodemittel gespeichert sind, um das erfindungsgemäße Verfahren und die vorteilhafte Ausgestaltungen davon durchzuführen, wenn die Programmcodemittel in einen Speicher eines elektronischen Steuergeräts geladen und auf einem Prozessor des elektronischen Steuergeräts abgearbeitet werden.

Die mit Bezug auf das erfindungsgemäße Verfahren vorgestellten bevorzugten Ausführungsformen und deren Vorteile gelten entsprechend für die erfindungsgemäße Ultraschallsensorvorrichtung, für das erfindungsgemäße Fahrerassistenzsystem, für das erfindungsgemäße Kraftfahrzeug für das erfindungsgemäße Computerprogrammprodukt sowie für das erfindungsgemäße computerlesbare Medium.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug mit einem Fahrerassistenzsystem gemäß einer Ausführungsform der Erfindung, wobei das Fahrerassistenzsystem eine Sensoreinrichtung zum Erfassen zumindest eines Objekts in der Umgebung des Kraftfahrzeugs aufweist;
- Fig. 2: ein Bild, welches mit einer Kamera der Sensoreinrichtung bereitgestellt wird, wobei das Bild Objekte in der Umgebung beschreibt, sowie Vektoren, welche anhand der Objekte bestimmt werden;
- Fig. 3: eine schematische Darstellung einer vektorbasierten Umgebungskarte, welche die Umgebung beschreibt;
- Fig. 4: eine schematische Darstellung einer gitterbasierten Umgebungskarte, welche die Umgebung beschreibt;
- Fig. 5: eine gitterbasierten Umgebungskarte gemäß einer weiteren Ausführungsform.

In den Figuren werden gleiche oder funktionsgleiche Elemente mit den gleichen Bezugszeichen versehen.

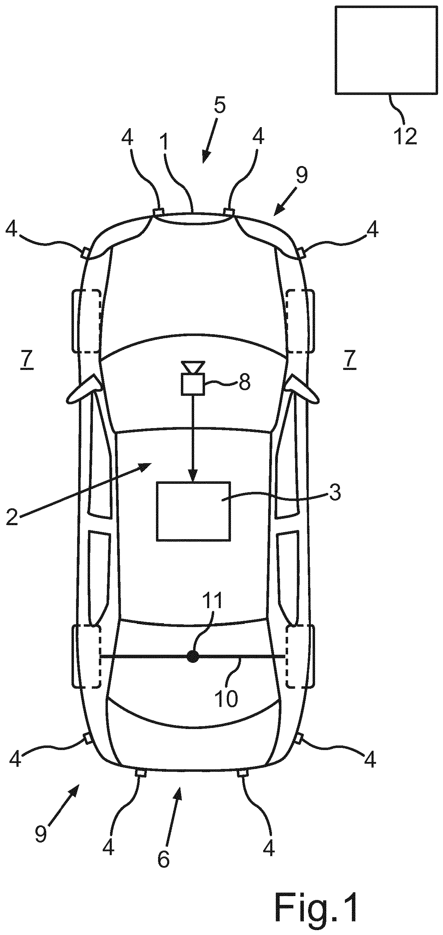

Fig. 1 zeigt ein Kraftfahrzeug 1 gemäß einer Ausführungsform der Erfindung in einer Draufsicht. Das Kraftfahrzeug 1 umfasst ein Fahrerassistenzsystem 2. Das Fahrerassistenzsystem 2 umfasst wiederum ein elektronisches Steuergerät 3 (Electronic Control Unit, ECU). Des Weiteren umfasst das Fahrerassistenzsystem 2 eine Sensoreinrichtung 9, welche zumindest einen Umfeldsensor umfasst.

In dem vorliegenden Ausführungsbeispiel umfasst die Sensoreinrichtung 9 als Umfeldsensoren acht Ultraschallsensoren 4. Dabei sind vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet. Mit Hilfe der Ultraschallsensoren 4 kann zumindest ein Objekt 12 in einer Umgebung 7 des Kraftfahrzeugs 1 erfasst werden. Zudem kann der Abstand zwischen dem Kraftfahrzeug 1 bzw. einem der Ultraschallsensoren 4 und dem Objekt 12 bestimmt werden. Zu diesem Zweck sendet der Ultraschallsensor 4 ein Ultraschallsignal aus. Dieses Ultraschallsignal wird von dem Objekt 12 reflektiert und von dem Ultraschallsensor 4 wieder empfangen. Anhand der Laufzeit des Ultraschallsignals kann der Abstand zwischen dem Kraftfahrzeug 1 bzw. dem Ultraschallsensor 4 und dem Objekt 12 bestimmt werden. Das Objekt 12 kann auch mit mehrere Ultraschallsensoren 4 erfasst werden. Somit kann die relative Lage zwischen dem Kraftfahrzeug 1 und dem Objekt 12 bestimmt werden. Mit den jeweiligen Ultraschallsensoren 4 können Sensordaten bereitgestellt werden, welche die Umgebung 7 und/oder das Objekt 12 beschreiben.

Des Weiteren umfasst die Sensoreinrichtung 9 als Umfeldsensor eine Kamera 8. Es kann auch vorgesehen sein, dass die Sensoreinrichtung 9 mehrere Kameras 8 aufweist. Mit der Kamera 8 können als Sensordaten Bilder 13 bereitgestellt werden, welches die Umgebung 7 und/oder das Objekt 12 zeigt. Das Steuergerät 3 ist mit den Ultraschallsensoren 4 und der Kamera 8 zur Datenübertragung verbunden. Somit können die Sensordaten, welche mit den Ultraschallsensoren 4 und der Kamera 8 bereitgestellt werde, an das Steuergerät 3 übertragen werden.

Das Fahrerassistenzsystem 2 kann zudem dazu ausgelegt sein, eine aktuelle Position des Kraftfahrzeugs 1 zu ermitteln. Hierzu können die Signale eines satellitengestützten Positionsbestimmungssystems berücksichtigt werden. Weiterhin kann es vorgesehen sein, dass die aktuelle Position des Kraftfahrzeugs 1 mittels Odometrie bestimmt wird. Zu diesem Zweck können beispielsweise die Anzahl der Radumdrehungen zumindest eines Rades des Kraftfahrzeugs 1 und/oder ein Lenkwinkel des Kraftfahrzeugs 1 erfasst werden. Auf diese Weise kann auch die Eigenbewegung des Kraftfahrzeugs 1 bestimmt werden.

Weiterhin kann das Steuergerät 3 dazu ausgebildet sein, eine Trajektorie 14 zum Manövrieren des Kraftfahrzeugs 1 zu berechnen. Hierzu können auch die äußeren Abmessungen des Kraftfahrzeugs 1 berücksichtigt werden, die beispielsweise in einer Speichereinheit der Steuereinrichtung 3 hinterlegt sind. Mittels des Fahrerassistenzsystems 2 kann dann das Kraftfahrzeug 1 semi-autonom entlang der Trajektorie 14 bewegt werden. Hierbei kann beispielsweise die Lenkung von dem Fahrerassistenzsystem 2 übernommen werden. Der Fahrer betätigt weiterhin das Gaspedal und die Bremse. Alternativ dazu kann das Kraftfahrzeug 1 auch autonom entlang der Trajektorie 14 bewegt werden. Hierbei steuert das Fahrerassistenzsystem 2 auch den Antrieb und die Bremse des Kraftfahrzeugs 1.

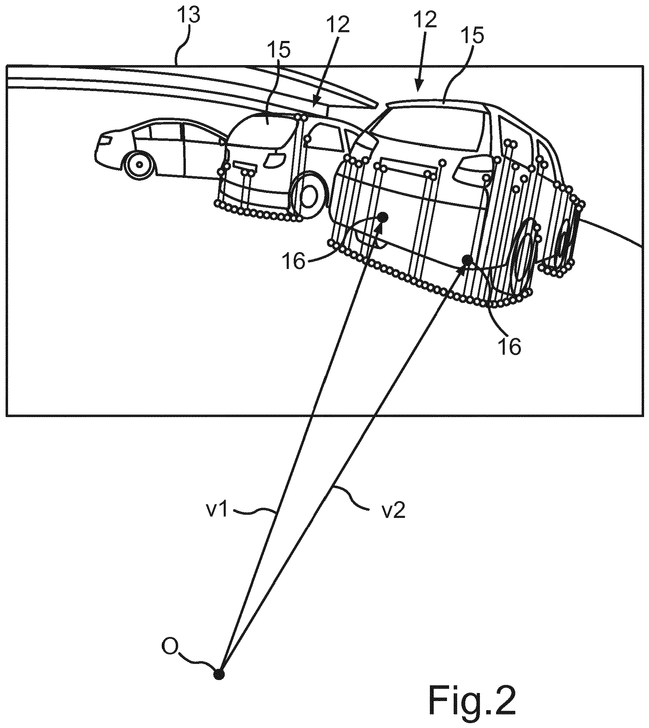

Fig. 2 zeigt ein Bild 13, welches mit der Kamera 8 der Sensoreinrichtung 9 bereitgestellt wird. In diesem Bild 13 sind Abbilder 15 von Objekten 12, welche sich in der Umgebung 7 des Kraftfahrzeugs 1 befinden, zu erkennen. Bei den Objekten 12 handelt es sich vorliegend um geparkte Fahrzeuge. Mithilfe eines entsprechenden Objekterkennungsalgorithmus, insbesondere eines dreidimensionalen Objekterkennungsalgorithmus, können einzelne Objektpunkte 16 beziehungsweise Stützstelle der Objekte 12 in den jeweiligen Abbildern 15 erkannt werden. Vorliegend sind rein beispielhaft zwei Objektpunkte 16 dargestellt. Zudem werden Vektoren v1, v2 zu diesen Objektpunkten 16 bestimmt. Dabei werden die Vektoren v1, v2 ausgehend von einem Ursprung O bestimmt. Dieser Ursprung O kann beispielsweise einem Mittelpunkt 11 einer Hinterachse 10 des Kraftfahrzeugs 1 zugeordnet sein. Diese Vektoren v1, v2 beschreiben die relative Lage zwischen den Ursprung O und den jeweiligen Objektpunkten 16 der erkannten Objekte 12. Durch die Bestimmung der Vektoren v1, v2 sollen die Objekte 12 mit einer hohen räumlichen Auflösung erfasst werden. Hierzu kann es beispielsweise vorgesehen sein, dass die einzelnen Objektpunkte 16 einen Abstand von mehreren Zentimetern zueinander aufweisen. Beispielweise können die Objektpunkte 16 so gewählt werden, dass diese einen Abstand zwischen 30 Zentimeter und 50 Zentimeter zueinander aufweisen. Im Bereich von Rundungen des Objekts 12 kann der Abstand zwischen den Objektpunkten 16 geringer sein und beispielsweise wenige Zentimeter betragen. Grundsätzlich können zwei benachbarte Objekte 12, welche als solche anhand der Sensordaten aufgelöst werden können, mit einer räumlichen Auflösung beziehungsweise Genauigkeit von beispielsweise einem Zentimeter in der vektorbasierten Umgebungskarte 17 kartiert werden. Da eine solche räumliche Auflösung aber aus Funktionssicht nicht sinnvoll ist, kann der Abstand zwischen den Objektpunkten 16 mehrere Dezimeter betragen. Auf diese Weise kann Speicher eingespart werden. Es kann ferner vorgesehen sein, dass mehrere Objektpunkte 16, die einem einzigen Objekt 12 zugeordnet werden, zusammengefasst werden.

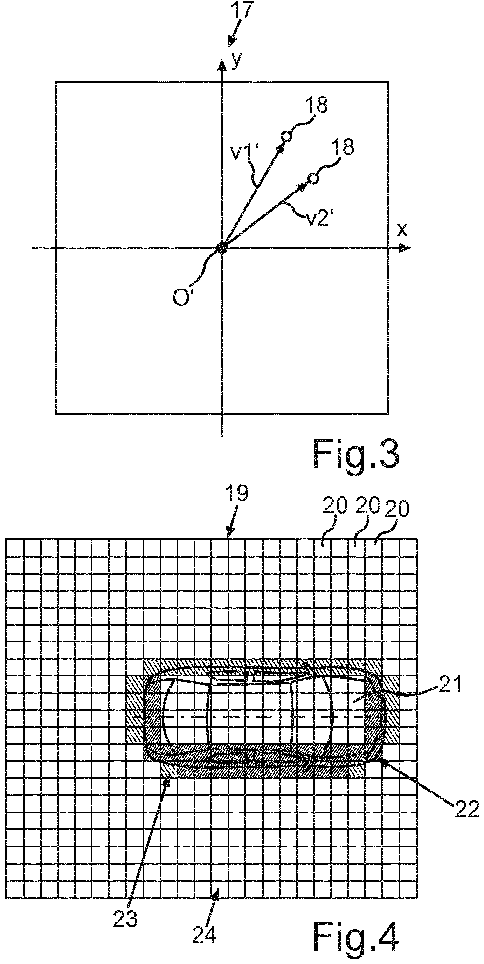

Anhand der Vektoren v1, v2 kann nun mittels des Steuergeräts 3 eine vektorbasierte Umgebungskarte 17 bereitgestellt werden, welche die Umgebung 7 des Kraftfahrzeugs 1 beschreibt. Eine solche vektorbasierte Umgebungskarte 17 ist beispielhaft in Fig. 3 dargestellt. Diese vektorbasierte Umgebungskarte 17 ist bezüglich der beiden Achsen x und y eines Koordinatensystems definiert. Dieses Koordinatensystem weist einen Ursprung O` auf, welcher den Ursprung O der realen Welt abbildet. Darüber hinaus sind in dem Koordinatensystem beziehungsweise der vektorbasierten Umgebungskarte 17 Vektoren v1 ` und v2' definiert, welche jeweils die Vektoren v1 und v2 abbilden. Des Weiteren sind die Objekte 12 beziehungsweise die Objektpunkte 16 der Objekte 12 durch jeweilige Objektmerkmale 18 repräsentiert. Auf Grundlage der Objektmerkmale 18 sowie der Vektoren v1', v2' können die Objekte 12 aus der Umgebung 7 des Kraftfahrzeugs 1 beziehungsweise deren Objektpunkte 16 präzise repräsentiert werden. Die jeweiligen Vektoren v1', v2` können mit einem geringen Speicherbedarf gespeichert werden. Zudem ergibt sich der Vorteil, dass die jeweiligen Positionen der Objektpunkte 16 mit einer hohen räumlichen Auflösung, welche beispielsweise im Zentimeterbereich oder Millimeterbereich liegen kann, abgespeichert werden kann.

Den jeweiligen Objektmerkmalen 18 können zusätzliche Eigenschaften zugeordnet werden. Als Eigenschaft kann einem Objektmerkmal 18 beispielsweise eine Existenzwahrscheinlichkeit zugeordnet werden. Den jeweiligen Objektmerkmalen 18 kann als Eigenschaft auch eine räumliche Unsicherheit zugeordnet werden. Die Existenzwahrscheinlichkeit und/oder die räumliche Unsicherheit können anhand der Sensordaten, die von den Ultraschallsensoren 4 und der Kamera 8 bereitgestellt werden, bestimmt werden. Dabei ist es insbesondere vorgesehen, dass die jeweiligen Sensordaten fusioniert werden.

Des Weiteren ist es vorgesehen, dass zusätzlich zu der vektorbasierten Umgebungskarte 17 eine gitterbasierte Umgebungskarte 19 bereitgestellt wird, welche die Umgebung 7 des Kraftfahrzeugs 1 beschreibt. Eine solche gitterbasierte Umgebungskarte, welche auch als Grid-basierte Umgebungskarte bezeichnet werden kann, ist beispielhaft in Fig. 4 dargestellt. Diese gitterbasierte Umgebungskarte 19 umfasst eine Mehrzahl von Zellen 20, wobei jede Zelle 20 einen vorbestimmten Bereich der Umgebung 7 abbildet. Jeder der Zellen 20 kann beispielsweise einen Bereich der Umgebung 7 mit einer Fläche von 50 Zentimetern mal 50 Zentimeter abbilden. Darüber hinaus ist der vorliegenden gitterbasierte Umgebungskarte 19 ein Abbild 21 des Kraftfahrzeugs 1 dargestellt.

Auch die gitterbasierte Umgebungskarte 19 wird mittels des Steuergeräts 3 anhand der Sensordaten bestimmt und fortlaufend aktualisiert. Mit dieser gitterbasierte Umgebungskarte 19 soll nun ein so genannter Freiraum repräsentiert werden. Dabei beschreibt der Freiraum den Bereich der Umgebung 7, welcher frei von Objekten 12 ist. Beispielsweise kann jeder Zelle 20 ein Wert zugeordnet werden, welcher beschreibt, ob die Zelle 20 einen Freiraum beschreibt beziehungsweise frei ist oder ob der Zustand der Zelle 20 unbekannt ist. Bei den Zellen 20, die keine Schraffur aufweisen und die durch das Bezugszeichen 24 gekennzeichnet sind, ist der Zustand unbekannt. Es kann auch vorgesehen sein, dass den jeweiligen Zellen 20 eine Freiraumwahrscheinlichkeit zugeordnet wird. Dies ist vorliegend durch die Zellen 20, denen unterschiedliche Schraffuren 22, 23 zugeordnet sind, verdeutlicht. Beispielsweise kann den Zellen 20 mit einer ersten Schraffuren 22 eine hohe Freiraumwahrscheinlichkeit zugeordnet sein. Dies bedeutet insbesondere, dass diese Zellen 20 mit einer hohen Wahrscheinlichkeit frei von Objekten 12 sind. Die Zellen 20 mit der zweiten Schraffuren 23 sind vermutlich frei. Diesen Zellen 20 kann eine geringere Freiraumwahrscheinlichkeit zugeordnet werden. Auf diese Weise kann der Freiraum mit einem geringen Speicherbedarf mittels der gitterbasierten Umgebungskarte 19 repräsentiert werden.

Auf Grundlage der vektorbasierten Umgebungskarte 17 und der gitterbasierte Umgebungskarte 19 soll das Kraftfahrzeug 1 mithilfe des Fahrerassistenzsystems 2 manövriert werden. Dabei ist es insbesondere vorgesehen, dass die jeweiligen Umgebungskarten, 17, 19 fortlaufend anhand der Sensordaten, die mit den Umfeldsensoren bereitgestellt werden, aktualisiert werden. Des Weiteren ist es vorgesehen, dass die vektorbasierte Umgebungskarte 17 und die gitterbasierte Umgebungskarte 19 fortlaufend synchronisiert werden. Hierbei kann überprüft werden, ob ein Objektmerkmal 18 der vektorbasieren Umgebungskarte 17 sich in einer korrespondierenden Zelle 20 der gitterbasierten Umgebungskarte 19 befindet, welche den Freiraum beschreibt.

Um das Kraftfahrzeug 1 mithilfe des Fahrerassistenzsystems 2 zumindest semi-autonom zu manövrieren, ist es nun vorgesehen, dass sowohl die vektorbasierte Umgebungskarte 17 als auch die gitterbasierte Umgebungskarte 19 genutzt werden. Dabei kann die vektorbasierte Umgebungskarte 17 eingesetzt werden, wenn Abstände zu Objekten 12 präzise bestimmt werden sollen oder diese Abstände dem Fahrer angezeigt werden sollen. Dies eignet sich beispielsweise, wenn das Kraftfahrzeug 1 mittels des Fahrerassistenzsystems 2 zumindest semi-autonom in eine Parklücke eingeparkt werden soll. Hierbei ist es üblicherweise der Fall, dass das Kraftfahrzeug 1 während des Einparkens sehr dicht an den Objekten 12, welche die Parklücke begrenzen, beziehungsweise an den parkenden Fahrzeugen vorbeifährt.

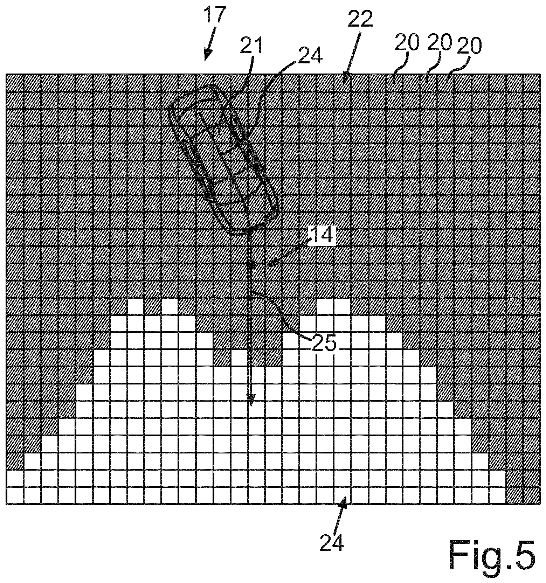

Wenn grundsätzlich eine Trajektorie 14 geplant werden soll, wird diese üblicherweise so geplant, dass das Kraftfahrzeug 1 nicht dicht an Objekten 12 vorbei manövriert wird. Hierzu kann zunächst die gitterbasierte Umgebungskarte 19 verwendet werden, welche den Freiraum beschreibt. Innerhalb des Freiraums kann dann die Trajektorie 14 geplant werden. Hierzu zeigt Fig. 5 ein weiteres Beispiel einer gitterbasierte Umgebungskarte 19. Hierbei beschreiben die Zellen 20 mit der Schraffuren 22 den Freiraum. Die Zellen 20, welche nicht schraffiert sind, weisen einen unbekannten Zustand auf und können daher ein Objekt 12 beschreiben. Die Zellen 20, welche als unbekannt gekennzeichnet sind, können beispielsweise Objekte 12 in Form von geparkten Fahrzeugen beschreiben, welche eine Querparklücke begrenzen. Vorliegend soll das Kraftfahrzeug 1 in diese Querparklücke eingeparkt werden.

Anhand der gitterbasierten Umgebungskarte 19 kann zunächst der Freiraum bestimmt werden und innerhalb des Freiraums ein Abschnitt 24 der Trajektorie 14 geplant werden. Dabei wird der erste Abschnitt 24 der Trajektorie 14 so geplant, dass sich das Kraftfahrzeug 1 in einem Bereich der Umgebung 7 geplant wird, der sicher frei von Objekten 12 ist. Bei dem Manövrieren des Kraftfahrzeugs 1 entlang eines zweiten Abschnitts 25 der Trajektorie 14 nähert sich das Kraftfahrzeug 1 einem Bereich, der in der gitterbasierten Umgebungskarte 19 als unbekannt gekennzeichnet ist. Hier ist es wahrscheinlich, dass ein vorbestimmter Mindestabstand zwischen dem Kraftfahrzeug 1 und den möglichen Objekten 12 unterschritten wird. In diesem Fall ist es vorgesehen, dass zur Planung des zweiten Abschnitts 25 der Trajektorie 14 die vektorbasierte Umgebungskarte 17 herangezogen wird, welche die jeweiligen Positionen der Objekte 12 beziehungsweise deren Objektpunkte 16 mit einer hohen räumlichen Auflösung beschreibt. Hier wird also von der gitterbasierten Umgebungskarte 19 auf die vektorbasierte Umgebungskarte 17 umgeschaltet. Somit kann das Kraftfahrzeug 1 sicher an den Objekten 12 vorbei manövriert werden und in der Querparklücke eingeparkt werden.

Ein weiterer Anwendungsfall ergibt sich bei der Synchronisation der beiden Umgebungskarten 17, 19. Hier kann es der Fall sein, dass anhand der Sensordaten, die mit einem Umfeldsensor bereitgestellt werden, in der vektorbasierten Umgebungskarte 17 ein Objektmerkmal 18 bestimmt wird und dass die zu dem Objektmerkmal 18 korrespondierende Zelle 20 in der gitterbasierten Umgebungskarte 19 Freiraum beschreibt. Dies kann dadurch begründet sein, dass anhand der Sensordaten des Umfeldsensors, die in vorhergehenden Messzyklen empfangen wurden, das Objekt 12 nicht erkannt wurde und/oder dass dieses Objekt 12 in den Sensordaten eines weiteren Umfeldsensors nicht erkannt wird. In diesem Fall kann dann dieses Objekt 12 als dynamisches beziehungsweise bewegliches Objekt angenommen werden. Es kann auch vorgesehen sein, dass die Existenzwahrscheinlichkeit, die diesem Objekt 12, zugeordnet wird, reduziert wird.

Insgesamt werden vorliegend die jeweiligen Vorteile der vektorbasierten Umgebungskarte 17 und der gitterbasierten Umgebungskarte 19 vereint. Ferner kann die Umgebung 7 des Kraftfahrzeugs 1 durch die beiden Umgebungskarten 17, 19 präzise und mit einem geringen Speicherbedarf abgebildet werden. Durch die Synchronisation der vektorbasierten Umgebungskarte 17 und der gitterbasierten Umgebungskarte 19 können Objekte 12 auf zuverlässige Weise erfasst werden.

## Patentansprüche

1. Verfahren zum Betrieben eines Fahrerassistenzsystems (2) eines Kraftfahrzeugs (1), bei welchem von einer Sensoreinrichtung (9) fortlaufend Sensordaten empfangen werden, wobei die Sensordaten zumindest ein Objekt (12) in einer Umgebung (7) des Kraftfahrzeugs (1) beschreiben und anhand der Sensordaten eine relative Lage zwischen dem Kraftfahrzeug (1) und dem zumindest einen Objekt (12) bestimmt wird, eine vektorbasierte Umgebungskarte (17) bereitgestellt wird, welche die Umgebung (7) beschreibt, wobei in der vektorbasierten Umgebungskarte (17) das zumindest eine Objekt (12) durch ein Objektmerkmal (18) repräsentiert wird und die relative Lage zwischen dem Kraftfahrzeug (1) und dem zumindest einen Objekt (12) durch einen Vektor (v1', v2') beschrieben wird, wobei das Objektmerkmal (18) und/oder der Vektor (v1', v2') anhand der Sensordaten fortlaufend aktualisiert werden, wobei anhand der Sensordaten zusätzlich ein Freiraum bestimmt wird, welcher einen Bereich in der Umgebung (7) beschreibt, welcher frei von dem zumindest einen Objekt (12) ist, und eine gitterbasierte Umgebungskarte (19) bereitgestellt wird, welche die Umgebung (7) beschreibt, wobei die gitterbasierte Umgebungskarte (19) eine Mehrzahl von Zellen (20) aufweist, welche korrespondierende Bereiche in der Umgebung (7) abbilden, und der Freiraum in der gitterbasierten Umgebungskarte (19) anhand der Sensordaten repräsentiert und fortlaufend aktualisiert wird, wobei das Objektmerkmal (18) in der vektorbasierten Umgebungskarte (17) eine Existenzwahrscheinlichkeit des Objekts (12) beschreibt, wobei jeder Zelle (20) der gitterbasierten Umgebungskarte (19) anhand der Sensordaten eine Freirauwahrscheinlichkeit zugeordnet wird, welche beschreibt, mit welcher Wahrscheinlichkeit die Zelle (20) einen Freiraum beschreibt, wobei die vektorbasierte Umgebungskarte (17) und die gitterbasierte Umgebungskarte (19) fortlaufend synchronisiert werden, **dadurch gekennzeichnet, dass** falls bei dem Synchronisieren die Existenzwahrscheinlichkeit des Objektmerkmals (18) größer ist als die Freiraumwahrscheinlichkeit der zu dem Objektmerkmal (18) korrespondierenden Zelle (20), die Zelle (20) als belegt oder als unbekannt klassifiziert wird.

2. Verfahren nach Anspruch 1,
dass
das Objektmerkmal (18) in der vektorbasierten Umgebungskarte (17) eine räumliche Unsicherheit und/oder einen Erfassungszeitpunkt des Objekts (12) beschreibt.

3. Verfahren nach Anspruch 1 oder 2,
dass jeder Zelle (20) der gitterbasierten Umgebungskarte (19) ein Wert zugeordnet wird, welcher angibt, ob die Zelle (20) den Freiraum beschreibt, ob der Zustand der Zelle (20) unbekannt ist und/oder ob die Zelle (20) durch das zumindest eine Objekt (12) belegt ist.

4. Verfahren nach Anspruch 1,
dass falls anhand der Sensordaten ein weiteres Objekt in der Umgebung (7) erkannt wird und bei dem Synchronisieren ein diesem Objekt zugeordnetes Objektmerkmal (18) in der vektorbasierten Umgebungskarte (17) in der gitterbasierten Umgebungskarte (19) mit einer Zelle (20) korrespondiert, welche den Freiraum beschreibt, das weitere Objekt als von einer potenziellen Fehlmessung stammend eingestuft wird und/oder das weitere Objekt als dynamisches Objekt klassifiziert wird.

5. Verfahren nach Anspruch 4,
dass die Existenzwahrscheinlichkeit des dem weiteren Objekt zugeordneten Objektmerkmals (18) in Abhängigkeit von der Freirauwahrscheinlichkeit der zu dem Objektmerkmal (18) korrespondierenden Zelle (20) in der gitterbasierten Umgebungskarte (19) reduziert wird.

6. Verfahren nach einem der vorhergehenden Ansprüche,
dass das Kraftfahrzeug (1) mittels des Fahrerassistenzsystems (2) zumindest semi-autonom manövriert wird, wobei das Manövrieren in Abhängigkeit von einem durchgeführten Fahrmanöver und/oder dem zumindest einen Objekt (12) auf Grundlage der gitterbasierten Umgebungskarte (19) und/oder der vektorbasierten Umgebungskarte (17) durchgeführt wird.

7. Verfahren nach Anspruch 6,
dass vor dem zumindest semi-autonomen Manövrieren des Kraftfahrzeugs (1) eine Trajektorie (14) geplant wird, wobei die Trajektorie (14) zunächst anhand des in der gitterbasierten Umgebungskarte (19) beschriebenen Freiraums geplant wird.

8. Verfahren nach Anspruch 6 oder 7,
dass das Kraftfahrzeug (1) auf Grundlage der vektorbasierten Umgebungskarte (17) manövriert wird, falls ein Abstand zwischen dem Kraftfahrzeug (1) und dem zumindest einen Objekt (12) einen vorbestimmten Mindestabstand unterschreitet und/oder falls das zumindest einen Objekt (12) eine Parklücke begrenzt, in welche das Kraftfahrzeug (1) manövriert wird und/oder falls während des Manövrierens anhand der Sensordaten ein weiteres Objekt erkannt wird.

9. Verfahren nach einem der Ansprüche 6 bis 8,
dass das überprüft wird, ob das Objektmerkmal (18) in der vektorbasierten Umgebungskarte (17) oder zumindest eine Zelle (20) der gitterbasierten Umgebungskarte (19) eine aktuellere Information beschreiben und das Kraftfahrzeug (1) auf Grundlage derjenigen Umgebungskarte (17, 19) manövriert wird, welche die aktuellere Information beschreibt.

10. Verfahren nach einem der vorhergehenden Ansprüche,
dass die gitterbasierte Umgebungskarte (19) im Vergleich zu der vektorbasierten Umgebungskarte (17) mit einer geringeren räumlichen Auflösung bereitgestellt wird.

11. Verfahren nach einem der vorhergehenden Ansprüche,
dass die gitterbasierte Umgebungskarte (19) derart bestimmt wird, dass die Zellen (20), welche einen sich an eine Außenfläche des Kraftfahrzeugs (1) anschließenden Nahbereich beschreiben, eine höhere räumliche Auflösung aufweisen als die Zellen (20), welche einen von dem Nahbereich verschiedenen Fernbereich beschreiben.

12. Fahrerassistenzsystem (2) für ein Kraftfahrzeug (1), welches zum Durchführen eines Verfahrens nach einem der vorhergehenden Ansprüche ausgelegt ist.

## Claims

1. Method for operating a driver assistance system (2) of a motor vehicle (1), in which sensor data are continuously received from a sensor device (9), wherein the sensor data describe at least one object (12) in an environment (7) of the motor vehicle (1) and, on the basis of the sensor data, a relative position between the motor vehicle (1) and the at least one object (12) is determined, a vector-based environment map (17) describing the environment (7) is provided, wherein in the vector-based environment map (17) the at least one object (12) is represented by an object feature (18) and the relative position between the motor vehicle (1) and the at least one object (12) is described by a vector (v1', v2'), wherein the object feature (18) and/or the vector (v1', v2') are/is continuously updated on the basis of the sensor data, wherein on the basis of the sensor data additionally a free space describing a region in the environment (7) which is free of the at least one object (12) is determined and a grid-based environment map (19) describing the environment (7) is provided, wherein the grid-based environment map (19) has a plurality of cells (20) which map corresponding regions in the environment (7), and the free space is represented and continuously updated in the grid-based environment map (19) on the basis of the sensor data, wherein the object feature (18) in the vector-based environment map (17) describes an existence probability of the object (12), wherein each cell (20) of the grid-based environment map (19), on the basis of the sensor data, is assigned a free space probability describing the probability with which the cell (20) describes a free space, wherein the vector-based environment map (17) and the grid-based environment map (19) are continuously synchronized, **characterized**
**in that** if, in the course of synchronizing, the existence probability of the object feature (18) is greater than the free space probability of the cell (20) corresponding to the object feature (18), the cell (20) is classified as occupied or as unknown.

2. Method according to Claim 1,
in that the object feature (18) in the vector-based environment map (17) describes a spatial uncertainty and/or a capture time of the object (12).

3. Method according to Claim 1 or 2,
in that each cell (20) of the grid-based environment map (19) is assigned a value indicating whether the cell (20) describes the free space, whether the state of the cell (20) is unknown and/or whether the cell (20) is occupied by the at least one object (12).

4. Method according to Claim 1,
in that if, on the basis of the sensor data, a further object is recognized in the environment (7) and, in the course of synchronizing, an object feature (18) assigned to this object in the vector-based environment map (17) corresponds, in the grid-based environment map (19), to a cell (20) describing the free space, the further object is categorized as originating from a potential incorrect measurement and/or the further object is classified as a dynamic object.

5. Method according to Claim 4,
in that the existence probability of the object feature (18) assigned to the further object is reduced depending on the free space probability of the cell (20) corresponding to the object feature (18) in the grid-based environment map (19).

6. Method according to any of the preceding claims,
in that the motor vehicle (1) is manoeuvred at least semi-autonomously by means of the driver assistance system (2), wherein the manoeuvring is carried out depending on a driving manoeuvre carried out and/or on the at least one object (12) on the basis of the grid-based environment map (19) and/or the vector-based environment map (17).

7. Method according to Claim 6,
in that a trajectory (14) is planned before the at least semi-autonomous manoeuvring of the motor vehicle (1), wherein the trajectory (14) is firstly planned on the basis of the free space described in the grid-based environment map (19).

8. Method according to Claim 6 or 7,
in that the motor vehicle (1) is manoeuvred on the basis of the vector-based environment map (17) if a distance between the motor vehicle (1) and the at least one object (12) falls below a predetermined minimum distance and/or if the at least one object (12) delimits a parking gap into which the motor vehicle (1) is manoeuvred and/or if a further object is recognized on the basis of the sensor data during the manoeuvring.

9. Method according to any of Claims 6 to 8,
in that a check is made to establish whether the object feature (18) in the vector-based environment map (17) or at least one cell (20) of the grid-based environment map (19) describes more up-to-date information and the motor vehicle (1) is manoeuvred on the basis of that environment map (17, 19) which describes the more up-to-date information.

10. Method according to any of the preceding claims,
in that the grid-based environment map (19) is provided with a lower spatial resolution in comparison with the vector-based environment map (17).

11. Method according to any of the preceding claims,
in that the grid-based environment map (19) is determined in such a way that the cells (20) describing a close region adjacent to an exterior surface of the motor vehicle (1) have a higher spatial resolution than the cells (20) describing a distant region different from the close region.

12. Driver assistance system (2) for a motor vehicle (1), which is designed for carrying out a method according to any of the preceding claims.

## Revendications

1. Procédé permettant de faire fonctionner un système d'assistance au conducteur (2) d'un véhicule automobile (1) dans lequel des données de capteur sont reçues en continu en provenance d'un dispositif capteur (9), dans lequel les données de capteur décrivent au moins un objet (12) dans un environnement (7) du véhicule automobile (1), et les données de capteur permettent de déterminer une position relative entre le véhicule automobile (1) et ledit au moins un objet (12), et de fournir une carte d'environnement (17) à base de vecteurs qui décrit l'environnement (7), dans lequel sur la carte d'environnement (17) à base de vecteurs, ledit au moins un objet (12) est représenté par une particularité d'objet (18), et la position relative entre le véhicule automobile (1) et ledit au moins un objet (12) est décrite par un vecteur (v1', v2'), dans lequel la particularité d'objet (18) et/ou le vecteur (v1', v2') sont mis à jour en continu à l'aide des données de capteur, dans lequel les données de capteur permettent de déterminer de plus un espace libre qui décrit une zone dans l'environnement (7) qui est exempte dudit au moins un objet (12), et de fournir une carte d'environnement (19) à base de grille qui décrit l'environnement (7), dans lequel la carte d'environnement (19) à base de grille présente une pluralité de cellules (20) qui représentent des zones correspondantes dans l'environnement (7), et l'espace libre sur la carte d'environnement (19) à base de grille est représenté à l'aide des données de capteur et est mis à jour en continu, dans lequel la particularité d'objet (18) sur la carte d'environnement (17) à base de vecteurs décrit une probabilité d'existence de l'objet (12), dans lequel on associe à chaque cellule (20) de la carte d'environnement (19) à base de grille une probabilité d'espace libre qui décrit avec quelle probabilité la cellule (20) décrit un espace libre, dans lequel la carte d'environnement (17) à base de vecteurs et la carte d'environnement (19) à base de grille sont synchronisées en continues, **caractérisé en ce que**
si lors de la synchronisation, la probabilité d'existence de la particularité d'objet (18) est supérieure à la probabilité d'espace libre de la cellule (20) correspondant à la particularité d'objet (18), la cellule (20) est classifiée comme étant occupée ou inconnue.

2. Procédé selon la revendication 1,
en ce que la particularité d'objet (18) sur la carte d'environnement (17) à base de vecteurs décrit une incertitude spatiale et/ou un temps de détection de l'objet (12).

3. Procédé selon la revendication 1 ou 2,
en ce qu'on associe à chaque cellule (20) de la carte d'environnement (19) à base de grille une valeur qui indique si la cellule (20) décrit l'espace libre, si l'état de la cellule (20) est inconnue et/ou si la cellule (20) est occupée par ledit au moins un objet (12).

4. Procédé selon la revendication 1,
en ce que, si un autre objet est identifié dans l'environnement (7) à l'aide des données de capteur, et si lors de la synchronisation une particularité d'objet (18) associée à cet objet (18) sur la carte d'environnement (17) à base de vecteurs correspond sur la carte d'environnement (19) à base de grille à une cellule (20) qui décrit l'espace libre, l'autre objet est classé comme résultant d'une mesure potentiellement erronée, et/ou l'autre objet est classifié en tant qu'objet dynamique.

5. Procédé selon la revendication 4,
en ce que la probabilité d'existence de la particularité d'objet (18) associée à l'autre objet est réduite en fonction de la probabilité d'espace libre de la cellule (20) correspondant à la particularité d'objet (18) sur la carte d'environnement (19) à base de grille.

6. Procédé selon l'une quelconque des revendications précédentes,
en ce que le véhicule automobile (1) est manoeuvré de manière au moins semi-autonome au moyen du système d'assistance au conducteur (2), dans lequel la manoeuvre est effectuée en fonction d'une manoeuvre de conduite effectuée et/ou dudit au moins un objet (12) sur la base de la carte d'environnement (19) à base de grille et/ou de la carte d'environnement (17) à base de vecteurs.

7. Procédé selon la revendication 6,
en ce qu'avant la manoeuvre au moins semi-autonome du véhicule automobile (1), une trajectoire (14) est planifiée, dans lequel la trajectoire (14) est d'abord planifiée à l'aide de l'espace libre décrit sur la carte d'environnement (19) à base de grille.

8. Procédé selon la revendication 6 ou 7,
en ce que le véhicule automobile (1) est manoeuvré sur la base de la carte d'environnement (17) à base de vecteurs si une distance entre le véhicule automobile (1) et ledit au moins un objet (12) est inférieure à une distance minimale prédéterminée et/ou si ledit au moins un objet (12) délimite une place de stationnement sur laquelle le véhicule automobile (1) est manoeuvré et/ou si pendant la manoeuvre un autre objet est identifié à l'aide des données de capteur.

9. Procédé selon l'une quelconque des revendications 6 à 8,
en ce qu'il est vérifié si la particularité d'objet (18) sur la carte d'environnement (17) à base de vecteurs ou au moins une cellule (20) de la carte d'environnement (19) à base de grille décrivent une information plus récente, et le véhicule automobile (1) est manoeuvré sur la base de la carte d'environnement (17, 19) qui décrit les informations plus récentes.

10. Procédé selon l'une quelconque des revendications précédentes,
en ce que la carte d'environnement (19) à base de grille est fournie avec une résolution spatiale inférieure en comparaison avec la carte d'environnement (17) à base de vecteurs.

11. Procédé selon l'une quelconque des revendications précédentes,
en ce que la carte d'environnement (19) à base de grille est déterminée de telle sorte que les cellules (20) qui décrivent une zone proche adjacente à une surface extérieure du véhicule automobile (1) présentent une résolution spatiale supérieure à celle des cellules (20) qui décrivent une zone éloignée différente de la zone proche.

12. Système d'assistance au conducteur (2) pour un véhicule automobile (1) qui est conçu pour exécuter un procédé selon l'une quelconque des revendications précédentes.
